# EUROPEAN PATENT SPECIFICATION

(11) **EP 2 811 545 B1**
(45) Date of publication and mention of the grant of the patent: **26.10.2016**
(21) Application number: 14169364.8
(22) Date of filing: 21.05.2014
(51) Int. Cl.: H01M 2/20

(54) **Battery module**
Batteriemodul
Module de batterie

(30) Priority: 21.05.2013 US 201361825724 P; 02.04.2014 US 201414243600
(43) Date of publication of application: 10.12.2014
(73) Proprietor: Samsung SDI Co., Ltd., Yongin-si, Gyeonggi-do (KR)
(72) Inventor: PARK, Shi-Dong, Gyeonggi-do (KR); RHEE, Jong-Han, Gyeonggi-do (KR); KIM, Tae-Yong, Gyeonggi-do (KR); CHPO, Jun-Woo, Gyeonggi-do (KR); PARK, Seong-Joon, Gyeonggi-do (KR)
(74) Representative: Mounteney, Simon James

(56) References cited:
- EP-A1- 2 339 663
- JP-A- 2000 333 343
- US-A1- 2010 167 116
- US-A1- 2011 287 299

## Description

### BACKGROUND

### 1. Field

The present invention relates to a battery module, and more particularly, to a battery module including a plurality of battery cells.

### 2. Description of the Related Art

In general, battery cells are used as energy sources for mobile devices, electric vehicles, hybrid vehicles and the like. The shape of the battery cell is variously changed depending on the kind of external device to which the battery cell is applied.

A compact mobile device such as a cellular phone can be operated using the power of a single battery cell for a predetermined time. However, when long-time operation and/or high-power operation are required in an electric vehicle or hybrid vehicle which consumes a large amount of power, a large-capacity battery module is configured by electrically connecting a plurality of battery cells together in order to increase power and capacity. The output voltage or output current of such a battery module may be increased on the basis of the number of battery cells built in the battery module. In addition, a battery pack may be configured by electrically connecting and assembling such battery modules.

### SUMMARY

The present invention sets out to provide a battery module including a power terminal for connecting battery modules to each other.

According to an aspect of the present invention, there is provided a battery module, including an arrangement of battery cells in which the battery cells are disposed one after another in a first direction, each said battery cell having a terminal portion formed on one surface thereof; a first end block disposed at an outermost side of a first said battery cell that is situated in a first end region of the arrangement of battery cells, the said first end block being adapted to press against the battery cells and having a first power terminal portion for electrically connecting the battery module to another battery module; and a first connection portion electrically connecting the terminal portion of the first said battery cell to the first power terminal portion.

The power terminal portion may include an insertion hole formed in the one surface of the end block; and a power terminal inserted into the insertion hole and having a terminal hole.

The connection portion may include a first connection region electrically connected to the terminal portion of the battery cell disposed at the outermost side of the battery cells; an extending region is bent from the first connection region and extended toward the power terminal portion; and a second connection region extended from the extending region, and having a through-hole formed therein, wherein the through-hole corresponding to the terminal hole of the power terminal.

The end block may further include at least one projection portion formed around the power terminal.

A guide portion guided by the at least one projection portion may be formed in the second connection region.

The guide portion may be a guide hole into which the projection portion is inserted.

A fastening member may be coupled to the projection portion inserted into the guide hole.

The first connection region may be a bus-bar connected to a terminal of the battery cell disposed at the outermost side of the battery cells.

The first connection region may be electrically connected to the bus-bar connected to the terminal of the battery cell disposed at the outermost side of the battery cells.

The battery module may further include a bus-bar holder disposed on upper portions of the battery cells, and having openings formed therein so that the terminal portions are exposed through the respective openings. The bus-bar may be disposed on the opening.

The insertion hole may be formed inclined toward a side surface of the end block from the upper surface of the end block.

The battery module may further include an end plate respectively disposed on outer surfaces of the end blocks.

At least one protruding region protruded toward the end block may be formed at a side of the end plate facing the end block, and at least one accommodating region accommodating the protruding region therein may be formed in the end block.

The battery module may be connected to another battery module through the power terminal.

At least some of the above and other features of the invention are set out in the claims.

Embodiments of the present invention therefore provide a battery module in which end blocks, each having a power terminal portion, are respectively disposed at outermost sides of a plurality of battery cells, so that the battery module can be connected to another battery module. Further, the end blocks strongly press the plurality of battery cells, thereby preventing a swelling phenomenon of the battery cell.

### BRIEF DESCRIPTION OF THE DRAWINGS

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey the scope of the example embodiments to those skilled in the art.

In the drawing figures, dimensions may be exaggerated for clarity of illustration. It will be understood that when an element is referred to as being "between" two elements, it can be the only element between the two elements, or one or more intervening elements may also be present. Like reference numerals refer to like elements throughout.
FIG. 1 is a perspective view of a battery module according to an embodiment of the present invention.
FIG. 2 is an exploded perspective view of FIG. 1.
FIG. 3 is an enlarged perspective view of area A of FIG. 1, for illustrating a connection relationship between an end block and a connection portion.
FIG. 4 is a perspective view illustrating the end block according to the embodiment of the present invention.
FIG. 5 is a perspective view illustrating the connection portion according to the embodiment of the present invention.
FIG. 6 is a perspective view of a battery module according to another embodiment of the present invention.
FIG. 7 is a perspective view illustrating an end block and an end plate, shown in FIG. 6.
FIG. 8 is an enlarged perspective view illustrating a connection relationship between a connection portion and a power terminal portion according to another embodiment of the present invention.
FIG. 9 is a perspective view illustrating a connection portion according to another embodiment of the present invention.
FIG. 10 is a perspective view illustrating a connection relationship between the connection portion of FIG. 9 and the power terminal portion.

### DETAILED DESCRIPTION

In the following detailed description, only certain embodiments of the present invention have been shown and described, simply by way of illustration. As those skilled in the art would realize, the described embodiments may be modified in various different ways, all without departing from the spirit or scope of the present invention. Accordingly, the drawings and description are to be regarded as illustrative in nature and not restrictive. In addition, when an element is referred to as being "on" another element, it can be directly on the another element or be indirectly on the another element with one or more intervening elements interposed therebetween. Also, when an element is referred to as being "connected to" another element, it can be directly connected to the another element or be indirectly connected to the another element with one or more intervening elements interposed therebetween. Hereinafter, like reference numerals refer to like elements.

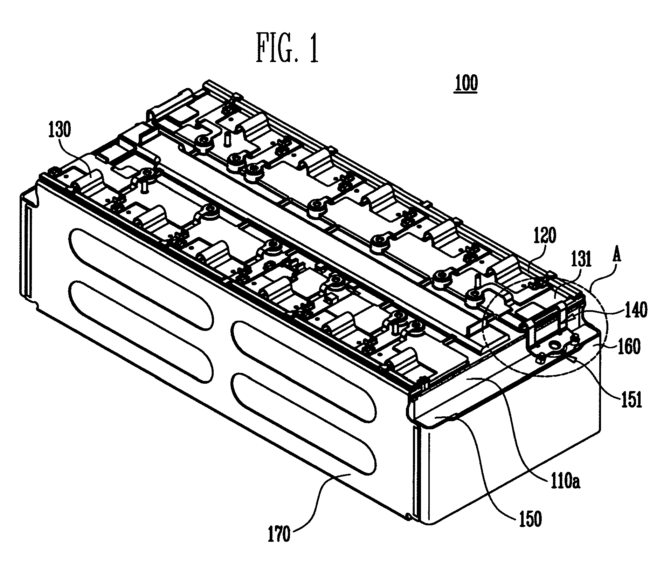

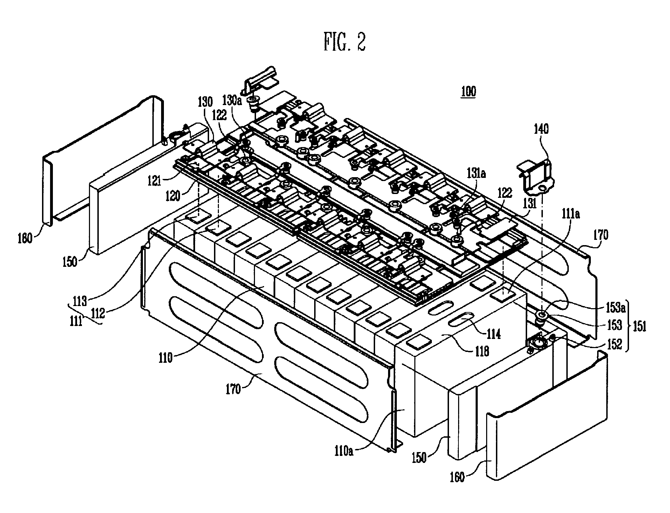

FIG. 1 is a perspective view of a battery module according to an embodiment of the present invention. FIG. 2 is an exploded perspective view of FIG. 1.

Referring to FIGS. 1 and 2, the battery module 100 according to this embodiment includes a plurality of battery cells 110 aligned in one direction, and each including a terminal portion 111 formed on one surface thereof; end blocks 150 respectively disposed at outermost sides of the battery cells 110, and each having a power terminal portion 151 formed on one surface thereof; and a connection portion electrically connecting a terminal portion 111a of the battery cell 110a disposed at the outermost side of the battery cells 110 to the power terminal portion 151.

The battery cells 110 each include a battery case, and an electrode assembly and an electrolyte, accommodated in the battery case. The electrode assembly and the electrolyte generate energy through an electrochemical reaction therebetween, and the battery case may be sealed by a first surface 118. In this embodiment, the first surface 118 of the battery cell 110 includes a cap assembly. The first surface 118 is provided with positive and negative electrode terminals 112 and 113 having different polarities, and a vent portion 114. The vent portion 114 is a safety means of the battery cell 110 and acts as a passage through which gas generated inside the battery cell 110 is exhausted to the outside of the battery cell 110.

A pair of end plates 160 are respectively disposed on outer surfaces of the end blocks 150, and a pair of side plates 170 are respectively disposed at side surfaces of the battery cells 110. The plurality of battery cells 110 are aligned in the one direction in the space defined by the pair of end plates 160 and the pair of side plates 170. In this regard, the plurality of battery cells 110 are arranged to be parallel to one another so that their wide front surfaces are opposite to each other. Thus, the positive and negative electrode terminals 112 and 113 of two neighboring battery cells 110 can be electrically connected to each other by a bus-bar 130. A bus-bar holder 120 is disposed on upper portions of the battery cells 110. Here, the bus-bar holder 120 has openings 121 through which the respective terminal portions 111 are exposed. The bus-bar 130 is disposed on the opening 121 for the purpose of connection between the terminal portions 111. The bus-bar 130 may be fastened to the bus-bar holder 120 through a bolt (not shown) inserted into a first fastening hole 122 formed in the bus-bar holder 120 and a second fastening hole 130a formed in the bus-bar 130.

An outermost bus-bar 131 is connected to the terminal portion 111a, to which the bus-bar 130 is not connected, in the terminal portions 111a of the battery cells 110a respectively disposed at the outermost sides of the battery cells 110. The outermost bus-bar 131 is not connected to the terminal portions 111 of the neighboring battery cells 110 but electrically connected to the terminal portion 111a and the connection portion 140. The outermost bus-bar 131 may be fastened to the bus-bar holder 120 through a bolt (not shown) inserted into a third fastening hole 131a formed in the outermost bus-bar 131 and the first fastening hole 122 formed in the bus-bar holder 120.

The shapes of the bus-bar 130 and the outermost bus-bar 131, etc. may be variously modified and embodied according to the design of the positive and negative electrode terminals 112 and 113.

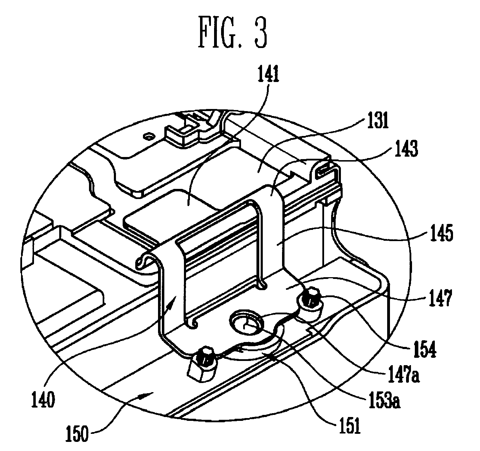

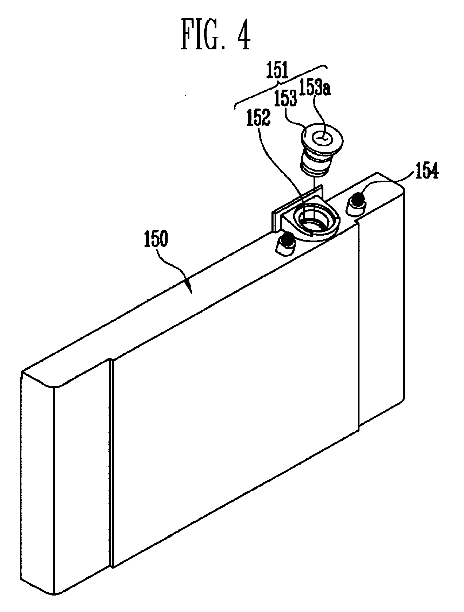

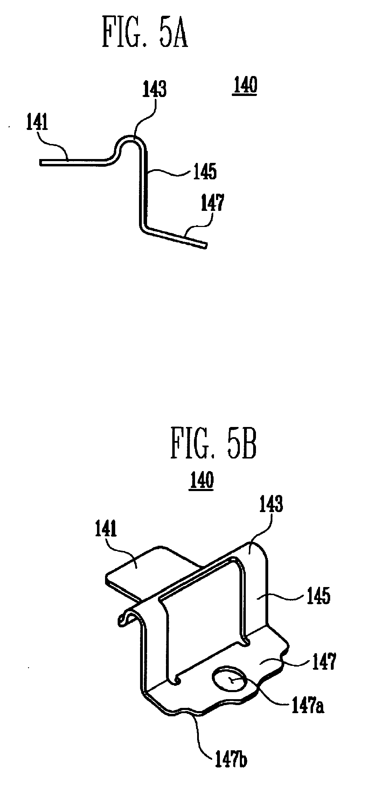

FIG. 3 is an enlarged perspective view of area A of FIG. 1, for illustrating a connection relationship between the end block and the connection portion. FIG. 4 is a perspective view illustrating the end block according to the embodiment of the present invention. FIG. 5 is a perspective view illustrating the connection portion according to the embodiment of the present invention.

Referring to FIGS. 3 to 5, the power terminal portion 151 is formed on one surface of the end block 150. The power terminal portion 151 provides the battery module 100 with a power terminal 153 electrically connected to the terminal portion 111a of the battery cell 110a disposed at the outermost side of the battery cell 110, so that the battery module 100 can be connected to another battery module through a power cable connected to the power terminal 153.

More specifically, the power terminal portion 151 includes an insertion hole 152 formed on the one surface of the end block 150, and the power terminal 153 inserted into the insertion hole 152 and including a terminal hole 153a.

In this embodiment, the insertion hole 152 is inclined toward a side surface of the end block 150 from the upper surface of the end block 150 in order to expand a space in which the power terminal 153 is to be inserted into the end block 150. In this regard, it is inclined away from the immediately adjacent battery cell. The power terminal 153 may be an insert nut, and the end block 150 may be injection-molded by inserting the insert nut into the insertion hole 152.

The connection portion 140 includes a first connection region 141 electrically connected to the terminal portion 111a of the battery cell 110a disposed at the outermost side of the battery cells 110; an extending region 145 bent at a bending portion 143 from the first connection region 141 and extended toward the power terminal portion 151; and a second connection region 147 extended from the extending region 145, and having a through-hole 147a formed therein. Here, the through-hole 147a corresponds to the terminal hole 153a of the power terminal 153.

The first connection region 141 may be connected to the outermost bus-bar 131 connected to the terminal portion 111a of the battery cell 110a disposed at the outermost side of the battery cells 110, so as to be electrically connected to the terminal portion 111a through the outermost bus-bar 131. As another embodiment, the first connection region 141 may be formed to extend from the outermost bus-bar 131 connected to the terminal portion 111a of the battery cell 110a disposed at the outermost side of the battery cells 110. That is, the embodiment of FIGS. 3 to 5 is merely one embodiment for illustrating that the first connection region 141 is electrically connected to the terminal portion 111a of the battery cell 110a disposed at the outermost side of the battery cells 110, and it will be apparent that various embodiments in which the first connection region 141 is electrically connected to the terminal portion 111a may exist according to the shapes of the terminal portion 111a and the outermost bus-bar 131.

At least one projection portion 154 is formed around the power terminal 153 on the upper surface of the end block 150. A guide portion 147b guided by the projection portion 154 formed around the power terminal 153 is formed in the second connection region 147. That is, the position of the second connection region 147 is guided by latching the guide portion 147b to the projection portion 154. Accordingly, the terminal hole 153a of the power terminal 153 and the through-hole 147a of the second connection region 147 can be disposed to correspond to each other.

According to this embodiment, the end block 150 may be formed of an insulative material, and the connection portion 140 and the power terminal 153 may be formed of an electrical conductive metal such as gold, silver, copper, nickel, aluminum, copper alloy or aluminum alloy.

The battery module 100 includes the end block 150 having the power terminal 153, so that the power terminal 153 of the battery module 100 can be connected to a power terminal 153 formed in another battery module. The connection between the power terminals 153 may be performed through a power cable, separate bus-bar or the like

The end blocks 150 are disposed to come in surface contact with the respective battery cells 110a disposed at the outermost sides of the battery cells 110. Thus, the end blocks 150 apply pressure to the inside of the battery cells 110, thereby preventing a swelling phenomenon occurring in the battery cell 110. In a conventional battery module, the outermost battery cells were pressed using only end plates. In this case, the thickness of the end plates was thin, and hence there was a limitation in strongly pressing the battery cells. However, in the present invention, the end blocks 150 are further provided, so that the thickness of a portion pressing the battery cell 110a is increased. Accordingly, it is possible to more strongly press the battery cell 110a.

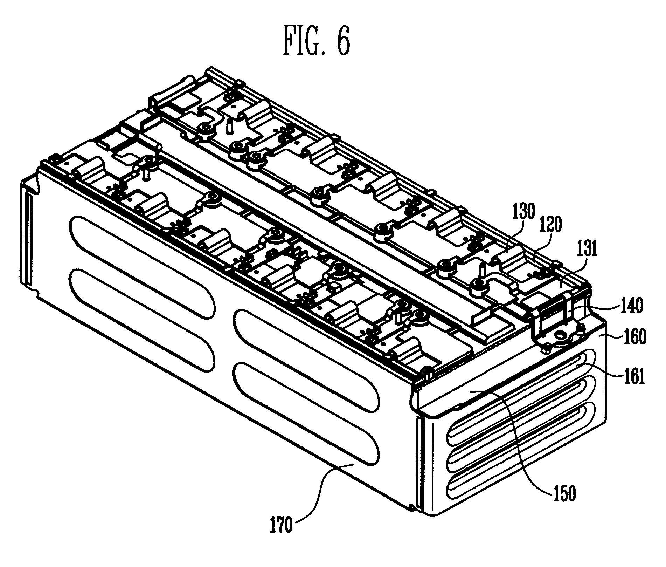

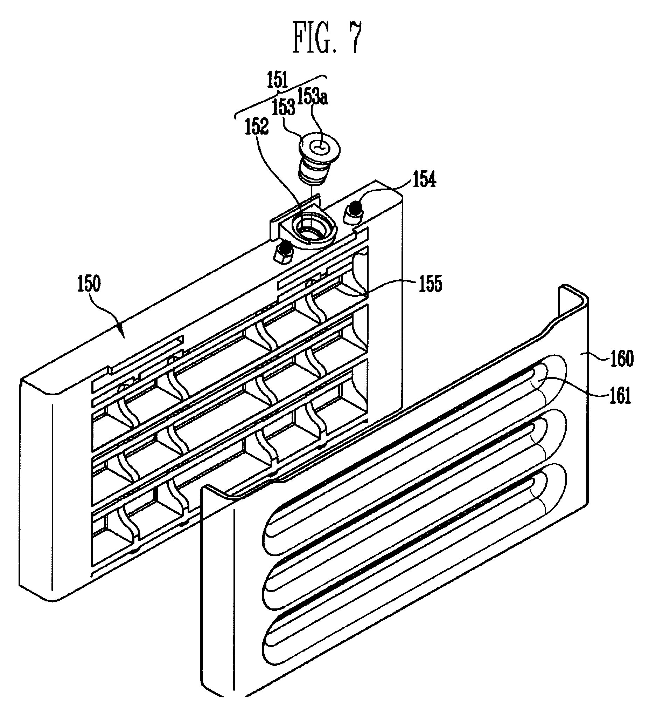

FIG. 6 is a perspective view of a battery module according to another embodiment of the present invention. FIG. 7 is a perspective view illustrating an end block and an end plate, shown in FIG. 6. Hereinafter, the end block and the end plate according to this embodiment will be described with reference to FIGS. 6 and 7. Here, components identical or corresponding to those of the aforementioned embodiment are designated by like reference numerals, and their detailed descriptions will be omitted to avoid redundancy.

Referring to FIGS. 6 and 7, at least one protruding region 161 protruded toward the end block 150 is formed at a side of the end plate 160. At least one accommodating region 155 accommodating the protruding region 161 therein is formed at a side of the end block 150. The protruding region 161 is accommodated in the accommodating region 155, so that the end block 150 and the end plate 160 can be coupled closely to each other, thereby increasing strength against bending of the end plate 160.

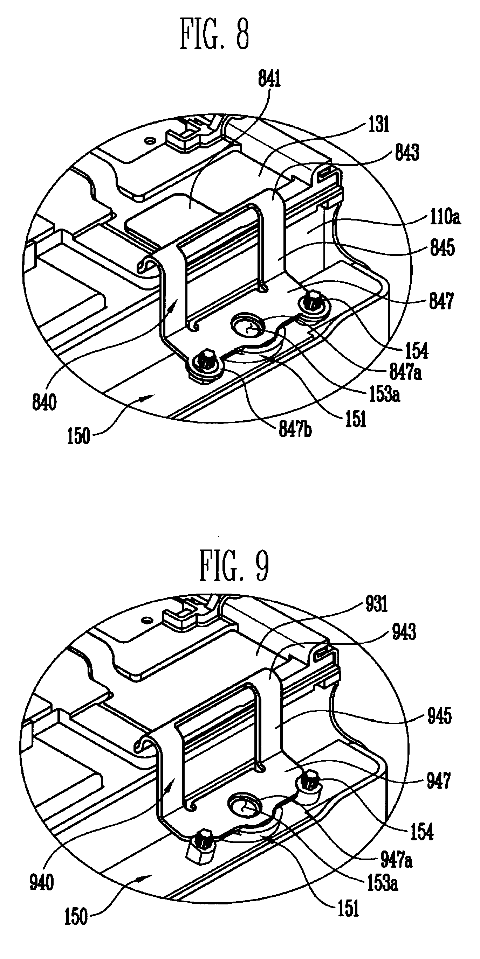

FIG. 8 is an enlarged perspective view illustrating a connection relationship between a connection portion and a power terminal portion according to another embodiment of the present invention. Hereinafter, the connection portion according to this embodiment will be described with reference to FIG. 8. Here, components identical or corresponding to those of the aforementioned embodiment are designated by like reference numerals, and their detailed descriptions will be omitted to avoid redundancy.

Referring to FIG. 8, the connection portion 840 includes a first connection region 841 electrically connected to the outermost bus-bar 131; an extending region 845 bent at a bending portion 843 from the first connection region 841 and extended toward the power terminal portion 151; and a second connection region 847 extended from the extending region 845, and having a through-hole 847a formed therein. Here, the through-hole 847a corresponds to the terminal hole 153a of the power terminal portion 151.

A guide hole 847b into which the projection portion 154 formed on the upper surface of the end block 150 is inserted so that the position of the second connection region 847 is guided by the guide hole 847b is formed in the second connection region 847.

That is, in the connection portion 840, the position of the second connection region 847 is guided by inserting the projection portion 154 into the guide hole 847b. Accordingly, the terminal hole 153a of the power terminal and the through-hole 847a of the second connection region 847 can be disposed to correspond to each other.

A fastening member (not shown) such as a nut is fastened to the projection portion 154 inserted into the guide hole 847b, so that the connection portion 840 and the power terminal portion 151 can be strongly coupled to each other.

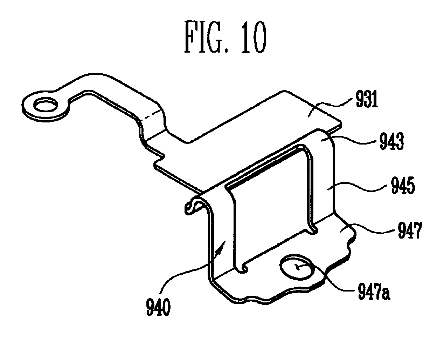

FIG. 9 is a perspective view illustrating a connection portion according to another embodiment of the present invention. FIG. 10 is a perspective view illustrating a connection relationship between the connection portion of FIG. 9 and the power terminal portion. Hereinafter, the connection portion according to this embodiment will be described with reference to FIGS. 9 and 10. Here, components identical or corresponding to those of the aforementioned embodiment are designated by like reference numerals, and their detailed descriptions will be omitted to avoid redundancy.

Referring to FIGS. 9 and 10, the connection portion 940 may include an outermost bus-bar 931 connected to the terminal portion 111a of the battery cell 110a disposed at the outermost side of the battery cells 110; an extending region 945 bent at a bending portion 943 from the outermost bus-bar 931 and extended toward the power terminal portion 151; and a second connection region 947 extended from the extending region 945, and having a through-hole 947a formed therein. Here, the through-hole 947a corresponds to the terminal hole 153a of the power terminal 153.

That is, unlike the embodiment of FIG. 2, the connection portion 940 is integrally formed with the outermost bus-bar 931, so that the power terminal portion 151 and the terminal portion 111a connected to the outermost bus-bar 931 can be electrically connected to each other through the connection portion 940. Here, the shape of the outermost bus-bar 931 may be variously modified and embodiment according to the design of the positive and negative electrode terminals 112 and 113.

Example embodiments of the invention have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A battery module comprising:
an arrangement of battery cells in which the battery cells are disposed one after another in a first direction, each said battery cell having a terminal portion formed on one surface thereof;
a first end block disposed at an outermost side of a first said battery cell that is situated in a first end region of the arrangement of battery cells, the said first end block being adapted to press against the battery cells and having a first power terminal portion for electrically connecting the battery module to another battery module; and
a first connection portion electrically connecting the terminal portion of the first said battery cell to the first power terminal portion.

2. A battery module according to claim 1, wherein the first power terminal portion includes an insertion hole formed in the first end block and a power terminal inserted into the insertion hole.

3. A battery module according to claim 1 or 2, wherein the first connection portion includes:
a first connection region electrically connected to the terminal portion of the first said battery cell;
an extending region connected to the first connection region and extends toward the power terminal portion; and
a second connection region extended from the extending region and electrically connected to the first power terminal portion.

4. A battery module according to claim 3, wherein the power terminal comprises a terminal hole and the second connection region has a through-hole formed therein, the location of the said through-hole corresponding to the location of the said terminal hole.

5. A battery module according to claim 3 or 4, wherein the first end block further includes a projection portion and the said second connection region comprises a guide portion guided by the at least one projection portion.

6. A battery module according to claim 5, wherein the guide portion comprises a guide hole into which the projection portion is inserted.

7. A battery module according to claim 5 or 6, wherein a fastening member is coupled to the projection portion to secure the position of the guide portion relative to the projection portion.

8. A battery module according to any one of claims 3 to 7, wherein the first connection region comprises a bus-bar connected to the terminal portion of the first said battery cell.

9. A battery module according to any one of claims 3 to 7, wherein the first connection region is electrically connected to a bus-bar connected to the terminal portion of the first said battery cell.

10. A battery module according to any preceding claim, further comprising a bus-bar holder disposed on upper portions of the battery cells, and having openings formed therein so that the terminal portions are exposed through the respective openings.

11. A battery module according to claim 2 or any claim dependent upon claim 2, wherein the insertion hole is inclined away from the first said battery cell.

12. A battery module according to any preceding claim and further including an end plate disposed on an outer surface of the first end block.

13. A battery module according to claim 12, wherein at least one protruding region protruding toward the first end block is formed at a side of the end plate facing the first end block, and at least one accommodating region that accommodates the protruding region therein is formed in the first end block.

14. A battery module according to any preceding claim, wherein the first power terminal portion is adapted to be connected to another battery module.

15. A battery module according to any preceding claim, comprising:
a second end block disposed at an outermost side of a second said battery cell that is situated in a second end region of the arrangement of battery cells that is opposite to the first end region, the said second end block having a second power terminal portion; and
a second connection portion electrically connecting the terminal portion of the second said battery cell to the second power terminal portion.

16. A battery module according to any preceding claim, wherein the first end block comprises a body portion formed from an insulating material; and the terminal portion of the said first battery cell and the first power terminal portion are formed from the same material.

## Patentansprüche

1. Batteriemodul, das Folgendes umfasst:
eine Anordnung von Batteriezellen, in der die Batteriezellen nacheinander in einer ersten Richtung angeordnet sind, wobei jede Batteriezelle einen Anschlussabschnitt hat, der an einer Oberfläche derselben geformt ist,
einen ersten Endblock, der an einer äußersten Seite einer ersten Batteriezelle angeordnet ist, die sich in einem ersten Endbereich der Anordnung von Batteriezellen befindet, wobei der erste Endblock dafür eingerichtet ist, gegen die Batteriezellen zu drücken, und einen ersten Leistungsanschlussabschnitt zum elektrischen Verbinden des Batteriemoduls mit einem anderen Batteriemodul hat, und
einen ersten Verbindungsabschnitt, der den Anschlussabschnitt der ersten Batteriezelle elektrisch mit dem ersten Leistungsanschlussabschnitt verbindet.

2. Batteriemodul nach Anspruch 1, wobei der erste Leistungsanschlussabschnitt ein Einsteckloch, das in dem ersten Endblock geformt ist, und einen Leistungsanschluss, der in das Einsteckloch eingesteckt wird, einschließt.

3. Batteriemodul nach Anspruch 1 oder 2, wobei der erste Verbindungsabschnitt Folgendes einschließt:
einen ersten Verbindungsbereich, der elektrisch mit dem Anschlussabschnitt der ersten Batteriezelle verbunden ist,
einen Ausdehnungsbereich, der mit dem ersten Verbindungsbereich verbunden ist und sich zu dem Leistungsanschlussabschnitt hin erstreckt, und
und einen zweiten Verbindungsbereich, der sich von dem Ausdehnungsbereich aus erstreckt und elektrisch mit dem ersten Leistungsanschlussabschnitt verbunden ist.

4. Batteriemodul nach Anspruch 3, wobei der Leistungsanschluss ein Anschlussloch umfasst und der zweite Verbindungsbereich ein Durchgangsloch hat, das in demselben geformt ist, wobei die Position des Durchgangslochs der Position des Anschlusslochs entspricht.

5. Batteriemodul nach Anspruch 3 oder 4, wobei der erste Endblock ferner einen Vorsprungsabschnitt einschließt und der zweite Verbindungsbereich einen Führungsabschnitt umfasst, der durch den wenigstens einen Vorsprungsabschnitt geführt wird.

6. Batteriemodul nach Anspruch 5, wobei der Führungsabschnitt ein Führungsloch umfasst, in das der Vorsprungsabschnitt eingesteckt wird.

7. Batteriemodul nach Anspruch 5 oder 6, wobei ein Befestigungselement an den Vorsprungsabschnitt gekoppelt ist, um die Position des Führungsabschnitts im Verhältnis zu dem Vorsprungsabschnitt zu sichern.

8. Batteriemodul nach einem der Ansprüche 3 bis 7, wobei der erste Verbindungsbereich eine Sammelschiene umfasst, die mit dem Anschlussabschnitt der ersten Batteriezelle verbunden ist.

9. Batteriemodul nach einem der Ansprüche 3 bis 7, wobei der erste Verbindungsbereich elektrisch mit einer Sammelschiene verbunden ist, die mit dem Anschlussabschnitt der ersten Batteriezelle verbunden ist.

10. Batteriemodul nach einem der vorhergehenden Ansprüche, das ferner eine Sammelschienenhalterung umfasst, die an oberen Abschnitten der Batteriezellen angeordnet ist und Öffnungen hat, die in derselben geformt sind, so dass die Anschlussabschnitte durch die jeweiligen Öffnungen freigelegt sind.

11. Batteriemodul nach Anspruch 2 oder einem von Anspruch 2 abhängigen Anspruch, wobei das Einsteckloch von der ersten Batteriezelle weg geneigt ist.

12. Batteriemodul nach einem der vorhergehenden Ansprüche und das ferner eine Endplatte einschließt, die an einer Außenfläche des ersten Endblocks bereitgestellt wird.

13. Batteriemodul nach Anspruch 12, wobei wenigstens ein vorspringender Bereich, der zu dem ersten Endblock hin vorspringt, an einer Seite der Endplatte, die dem ersten Endblock gegenüberliegt, geformt ist und wenigstens ein Aufnahmebereich, der den vorspringenden Bereich in demselben aufnimmt, in dem ersten Endblock geformt ist.

14. Batteriemodul nach einem der vorhergehenden Ansprüche, wobei der erste Leistungsanschlussabschnitt dafür eingerichtet ist, mit einem anderen Batteriemodul verbunden zu werden.

15. Batteriemodul nach einem der vorhergehenden Ansprüche, das Folgendes umfasst:
einen zweiten Endblock, der an einer äußersten Seite einer zweiten Batteriezelle angeordnet ist, die sich in einem zweiten Endbereich der Anordnung von Batteriezellen befindet, der zu dem ersten Endbereich entgegengesetzt ist, wobei der zweite Endblock einen zweiten Leistungsanschlussabschnitt hat, und
einen zweiten Verbindungsabschnitt, der den Anschlussabschnitt der zweiten Batteriezelle elektrisch mit dem zweiten Leistungsanschlussabschnitt verbindet.

16. Batteriemodul nach einem der vorhergehenden Ansprüche, wobei der erste Endblock einen aus einem Isolationsmaterial bestehenden Gehäuseteil umfasst; und der Anschlussabschnitt der ersten Batteriezelle und der erste Leistungsanschlussabschnitt aus dem gleichen Material geformt sind.

## Revendications

1. Module de batterie comprenant :
un agencement d'éléments de batterie dans lequel les éléments de batterie sont agencés les uns après les autres dans une première direction, chacun desdits éléments de batterie présentant une partie de borne formée sur une surface de celui-ci ;
un premier bloc d'extrémité agencé au niveau d'un côté le plus extérieur d'un premier parmi lesdits éléments de batterie qui est situé dans une première région d'extrémité de l'agencement d'éléments de batterie, ledit premier bloc d'extrémité étant conçu pour presser contre les éléments de batterie et présentant une première partie de borne d'alimentation permettant de raccorder électriquement le module de batterie à un autre module de batterie ; et
une première partie de raccordement raccordant électriquement la partie de borne dudit premier élément de batterie à la première partie de borne d'alimentation.

2. Module de batterie selon la revendication 1, dans lequel la première partie de borne d'alimentation comprend un trou d'insertion formé dans le premier bloc d'extrémité et une borne d'alimentation insérée dans le trou d'insertion.

3. Module de batterie selon les revendications 1 ou 2, dans lequel la première partie de raccordement comprend :
une première région de raccordement raccordée électriquement à la partie de borne du premier desdits éléments de batterie ;
une région d'extension raccordée à la première région de raccordement et qui s'étend en direction de la partie de borne d'alimentation ; et
une deuxième région de raccordement s'étendant à partir de la région d'extension et raccordée électriquement à la première partie de borne d'alimentation.

4. Module de batterie selon la revendication 3, dans laquelle la borne d'alimentation comprend un trou de borne et la deuxième région de raccordement présente un trou traversant formé en son sein, l'emplacement dudit trou traversant correspondant à l'emplacement dudit trou de borne.

5. Module de batterie selon les revendications 3 ou 4, dans lequel le premier bloc d'extrémité comprend en outre une partie formant saillie et ladite deuxième région de raccordement comprend une partie de guidage guidée par la au moins une partie formant saillie.

6. Module de batterie selon la revendication 5, dans lequel la partie de guidage comprend un trou de guidage dans lequel est insérée la partie formant saillie.

7. Module de batterie selon les revendications 5 ou 6, dans lequel un élément de fixation est couplé à la partie formant saillie afin de maintenir la position de la partie de guidage par rapport à la partie formant saillie.

8. Module de batterie selon l'une quelconque des revendications 3 à 7, dans lequel la première région de raccordement comprend une barre collectrice raccordée à la partie de borne dudit premier élément de batterie.

9. Module de batterie selon l'une quelconque des revendications 3 à 7, dans lequel la première région de raccordement est raccordée électriquement à une barre collectrice raccordée à la partie de borne dudit premier élément de batterie.

10. Module de batterie selon l'une quelconque des revendications précédentes, comprenant en outre un dispositif de retenue de barre collectrice agencé sur des parties supérieures des éléments de batterie, et présentant des ouvertures formées en son sein de sorte que les parties de borne sont exposées à travers les ouvertures respectives.

11. Module de batterie selon la revendication 2 ou selon l'une quelconque des revendications dépendantes de la revendication 2, dans lequel le trou d'insertion est incliné à distance dudit premier élément de batterie.

12. Module de batterie selon l'une quelconque des revendications précédentes et comprenant en outre une plaque d'extrémité agencée sur une surface extérieure du premier bloc d'extrémité.

13. Module de batterie selon la revendication 12, dans lequel au moins une région saillante faisant saillie en direction du premier bloc d'extrémité est formée au niveau d'un côté de la plaque d'extrémité faisant face au premier bloc d'extrémité, et au moins une région d'accueil qui accueille la région saillante en son sein est formée dans le premier bloc d'extrémité.

14. Module de batterie selon l'une quelconque des revendications précédentes, dans lequel la première partie de borne d'alimentation est conçue pour être raccordée à un autre module de batterie.

15. Module de batterie selon l'une quelconque des revendications précédentes, comprenant :
un deuxième bloc d'extrémité agencé au niveau d'un côté le plus extérieur d'un deuxième parmi lesdits éléments de batterie qui est située dans une deuxième région d'extrémité de l'agencement d'éléments de batterie qui est opposée à la première région d'extrémité, ledit deuxième bloc d'extrémité présentant une deuxième partie de borne d'alimentation ; et
une deuxième partie de raccordement raccordant électriquement la partie de borne dudit deuxième élément de batterie à la deuxième partie de borne d'alimentation.

16. Module de batterie selon l'une quelconque des revendications précédentes, dans lequel le premier bloc d'extrémité comprend une partie de corps formée à partir d'un matériau isolant ; et la partie de borne dudit premier élément de batterie et la première partie de borne d'alimentation sont formées à partir du même matériau.
